# EUROPEAN PATENT APPLICATION

(11) **EP 4 851 740 A1**
(43) Date of publication of application: **09.12.2026**
(21) Application number: 25747639.0
(22) Date of filing: 21.01.2025
(51) Int. Cl.: G05B 19/418

(54) **PATH PLANNING METHOD AND PATH PLANNING APPARATUS**

(30) Priority: 04.02.2024 CN 202410155371
(71) Applicant: Beijing Geekplus Technology Co., Ltd., Baoding, Hebei 071708 (CN)
(72) Inventor: LI, Jing, Baoding, Hebei 071708 (CN); ZHAI, Zhixin, Baoding, Hebei 071708 (CN); LV, Xiangdong, Baoding, Hebei 071708 (CN); DU, Jianwei, Baoding, Hebei 071708 (CN); WEI, Xiguang, Baoding, Hebei 071708 (CN); ZHAO, Chengye, Baoding, Hebei 071708 (CN); FU, Liangliang, Baoding, Hebei 071708 (CN); TAN, Wenzhe, Baoding, Hebei 071708 (CN); LI, Hongbo, Baoding, Hebei 071708 (CN); ZHENG, Yong, Baoding, Hebei 071708 (CN)
(74) Representative: Papa, Elisabetta
(86) International application number: PCT/CN2025/073641
(87) International publication number: WO 2025/162067

(57) **Abstract**

A path planning method and a path planning apparatus. The path planning method comprises: on the basis of map information, position information of a plurality of robots and handling tasks, determining a spatial path for each robot to execute a corresponding handling task (110); on the basis of the current position and device attributes of each robot, determining required resources and held resources of each robot on the spatial path for each robot (120); on the basis of the required resources and held resources of each robot, determining a plurality of waiting robot sets and a waiting relationship between a plurality of waiting robots in each waiting robot set (130); and on the basis of the waiting relationship between the plurality of waiting robots, adding a traveling state that corresponds to at least one time node to the spatial path for each waiting robot to obtain a spatiotemporal path for each waiting robot, and controlling each waiting robot to execute the handling task along the spatiotemporal path (140).

## Description

The application claims priority to Chinese Patent Application No. 202410155371.0, filed on February 4, 2024, the entire contents of which are incorporated herein by reference.

### TECHNICAL FIELD

The present disclosure relates to a field of warehousing and logistics technology, and specifically to a path finding method and a path finding apparatus.

### BACKGROUND

In the warehouse logistics and workshop manufacturing system, mobile robots are usually used to replace human labor to complete transportation work, so as to improve the working efficiency of the warehouse system. For example, the warehouse system may perform cluster scheduling on robots, find driving paths from a start point to an end point for a plurality of robots, and continuously schedule the robots, so that each robot may reach the end point as quickly as possible without collision. However, as the number of robots increases, situations of conflicts among the plurality of robots moving in the warehouse also increase. Therefore, how to reduce the congestion among a plurality of robots in the warehouse system on the basis of limited computational resources has become an urgent problem to be solved.

### SUMMARY

The embodiments of the present disclosure provide a path finding method and a path finding apparatus.

According to a first aspect of the embodiments of the present disclosure, a path finding method performed by a control device is provided, including: first, determining a spatial path for each of a plurality of robots to perform a corresponding transport task based on map information of a warehouse system, position information of the plurality of robots in the warehouse system, and the transport task corresponding to each of the robots; second, determining a required resource and a held resource of each of the robots on the spatial path for each of the robots to perform the corresponding transport task based on a current position of each of the robots and a device attribute of each of the robots; and then, determining a plurality of waiting robot sets among the plurality of robots and waiting relationships among a plurality of waiting robots in each of the waiting robot sets based on the required resource and the held resource of each of the robots; and obtaining a spatiotemporal path of each of the waiting robots by adding a driving state corresponding to at least one time node to a spatial path of each of the waiting robots based on the waiting relationships among the plurality of waiting robots in each of the waiting robot sets, and controlling each of the waiting robots to perform the transport task based on the spatiotemporal path, in which the driving state includes driving or waiting.

According to a second aspect of the embodiments of the present disclosure, a path finding apparatus is provided, including a first path determination module, a resource determination module, a relationship determination module, a second path determination module, and a control module. The first path determination module is configured to determine a spatial path for each of a plurality of robots to perform a corresponding transport task based on map information of a warehouse system, position information of the plurality of robots in the warehouse system, and the transport task corresponding to each of the robots; the resource determination module is configured to determine a required resource and a held resource of each of the robots on the spatial path for each of the robots to perform the corresponding transport task based on a current position of each of the robots and a device attribute of each of the robots; the relationship determination module is configured to determine a plurality of waiting robot sets among the plurality of robots and waiting relationships among a plurality of waiting robots in each of the waiting robot sets based on the required resource and the held resource of each of the robots; the second path determination module is configured to obtain a spatiotemporal path of each of the waiting robots by adding a driving state corresponding to at least one time node to a spatial path of each of the waiting robots based on the waiting relationships among the plurality of waiting robots in each of the waiting robot sets, in which the driving state includes driving or waiting; and the control module is configured to control each of the waiting robots to perform the transport task based on the spatiotemporal path.

According to a third aspect of the embodiments of the present disclosure, an electronic device is provided, including: a processor and a memory. The memory is configured to store computer-executable instructions. The processor is configured to read the instructions from the memory and perform the instructions to implement the path finding method according to the first aspect above.

According to a fourth aspect of the embodiments of the present disclosure, a computer-readable storage medium is provided. The storage medium stores computer program instructions that, when read by a computer, perform the path finding method according to the first aspect above.

According to a fifth aspect of the embodiments of the present disclosure, a computer program product is provided. The computer program product includes a computing program stored on a non-transitory computer-readable storage medium, and the computing program includes program instructions. When the program instructions are executed by a computer, the computer is caused to perform the path finding method according to the first aspect above.

According to a sixth aspect of the embodiments of the present disclosure, a computer program is provided. When the computer program is executed by a processor, the path finding method according to the first aspect above may be implemented.

### BRIEF DESCRIPTION OF THE DRAWINGS

In order to more clearly illustrate technical solutions in embodiments of the present disclosure, a brief description of drawings required to be used in the embodiments is given below. Obviously, the drawings in the following descriptions are only part embodiments of the present disclosure, and for those skilled in the art, other drawings may be obtained according to these drawings without creative labor.
FIG. 1 is a schematic diagram of a path finding method according to some embodiments of the present disclosure.
FIG. 2 is a schematic diagram of a waiting scenario according to some embodiments of the present disclosure.
FIG. 3 is a schematic diagram of a deadlock scenario according to some embodiments of the present disclosure.
FIG. 4 is a schematic diagram of another path finding method according to some embodiments of the present disclosure.
FIG. 5 is a schematic diagram of another path finding method according to some embodiments of the present disclosure.
FIG. 6 is a schematic diagram of a directed acyclic graph according to some embodiments of the present disclosure.
FIG. 7 is a schematic diagram of another path finding method according to some embodiments of the present disclosure.
FIG. 8 is a schematic diagram of another path finding method according to some embodiments of the present disclosure.
FIG. 9 is a block diagram of a path finding apparatus according to some embodiments of the present disclosure.
FIG. 10 is a block diagram of an electronic device according to some embodiments of the present disclosure.

### DETAILED DESCRIPTION

In order to enable those skilled in the art to better understand the technical solutions in the embodiments of the present disclosure, and to make the above purposes, features, and advantages of the embodiments of the present disclosure more obvious and understandable, the technical solutions in the embodiments of the present disclosure are further described in detail below in combination with the accompanying drawings.

Generally, in a warehouse system, mobile robots (hereinafter referred to as robots) may be used to replace human labor to complete transportation work, so as to improve the working efficiency of the warehouse system. For example, a control device in the warehouse system may perform cluster scheduling on a plurality of robots to control the movement of each robot in the warehouse system. The cluster scheduling for robots refers to finding paths from a start point to an end point for the plurality of robots, and continuously scheduling the robots to reach the end point as quickly as possible without collision.

In some examples, a multi-robot cluster scheduling problem may be abstracted as a multi-agent path finding (MAPF) problem, and implemented by a cluster scheduling system. Generally, a multi-robot cluster scheduling system includes two levels: path finding and scheduling execution. The path finding mainly refers to finding paths for robots, i.e., path searching. The scheduling execution mainly refers to allocating spatial resources for robots along the finding path, and also has functions of collision detection and right-of-way allocation, i.e., detecting and resolving conflicts. The cluster scheduling for a plurality of robots mainly includes two solutions, one is a distributed solution, and the other is a centralized solution.

For example, the distributed solution adopts distributed path finding and a rule-based right-of-way allocation policy. The distributed path finding refers to independently and parallelly invoking a single-robot path searching algorithm for each robot. The paths obtained via the distributed path finding do not consider conflicts among the robots. When a conflict occurs, the conflict may be resolved based on the rule-based right-of-way allocation policy. For example, the conflict may be resolved via some rules based on human experience, such as preemptive allocation, first-come-first-allocation, and straight-going priority over turning. Since the distributed solution does not consider conflicts among robots in path finding, although the computation speed is fast, the quality of the obtained path is poor, and the path conflicts among the robots may not be well coordinated, which easily causes congestion or deadlock among a plurality of robots, thus reducing the working efficiency of the warehouse system.

For another example, the centralized solution usually adopts algorithms such as MAPF to resolve path conflicts problem among robots via iterative search. For example, during the path finding, a robot may move from a current point to any point, or stay in place, thus obtaining a conflict-free spatiotemporal path within a window range. Therefore, the paths obtained via the centralized solution have high quality and few conflicts. However, the MAPF algorithm has many iterations, long computation time, and high computation complexity, which increases the computing resources of the system and is only applicable to some small-scale scenarios.

Therefore, in the cluster scheduling process of a plurality of robots, both the distributed solution and the centralized solution have disadvantages. The distributed solution may not better coordinate path conflicts among robots, which affects the working efficiency of the warehouse system. The centralized solution has high computation complexity and high requirements on system computing resources. In order to solve the above problems, the embodiments of the present disclosure provide a path finding method. With the distributed path finding, a spatial path of a robot is quickly obtained, and without changing the spatial path, only waiting and driving states are added to the spatial path to convert it into a spatiotemporal path. During low-level path searching, the robot may only move along the spatial path to the next path point or wait at the current path point. Further, from the perspective of overall optimality, waiting and driving of the robots are decided, and the robots are controlled to pass through conflict areas in an orderly manner. The path finding method provided by the embodiments of the present disclosure may reduce the path search space and accelerate the computation speed of the system, on the basis of mitigating congestion and deadlock among a plurality of robots.

The path finding method provided by the embodiments of the present disclosure is described below in combination with the accompanying drawings.

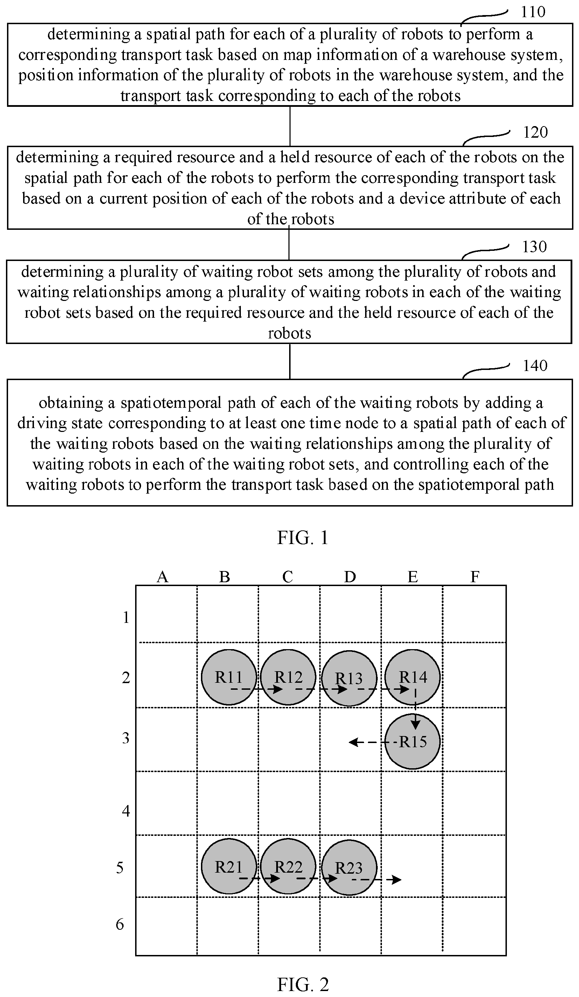

FIG. 1 is a schematic diagram of a path finding method according to some embodiments of the present disclosure.

In some examples, the path finding method shown in FIG. 1 may be implemented by a control device in a warehouse system. For example, the control device may be a server or a terminal, or may be a device deployed with a robot scheduling system. The terminal may include at least one of a personal computer, a laptop computer, a smartphone, a tablet computer, or a portable wearable device. The server may include an independent server or a server cluster composed of a plurality of servers, which is not limited in the embodiments of the present disclosure.

As shown in FIG. 1, the path finding method includes steps 110 to 140 as shown below.

At step 110, a spatial path for each of a plurality of robots is determined to perform a corresponding transport task based on map information of a warehouse system, position information of the plurality of robots in the warehouse system, and the transport task corresponding to each of the robots.

In some examples, the map information may include a grid map, a road network map, and so on. The control device may obtain the corresponding map information in the warehouse system, and in combination with the position information and the transportation tasks of the robots, perform distributed path finding for each robot to obtain a spatial path corresponding to each of the robots. The map information may be pre-generated and stored. When the distribution mode in the warehouse system changes, the map information may be updated, and the updated map information may be stored.

In some examples, the warehouse system includes a plurality of transport devices. The transport device may be a robot that is driving, performing a transportation task, or not performing a transportation task in the warehouse. For example, the robot may be an intelligent mobile robot in the warehouse system for transporting containers or carriers, such as a transport robot, which is not limited in the embodiments of the present disclosure.

For example, the carrier may be a movable shelf, a turnover cart, a cage cart, a container, a tote, an original carton, a pallet, etc. The carrier may accommodate a plurality of containers, and the robot may transport the carrier. The container may be a supporting product specially designed for the carrier, or may be an ordinary container (also referred to as a tote), or the container may also be a package of goods (also referred to as an original carton), which is not limited in the embodiments of the present disclosure.

For example, the carrier may include a fixed carrier and a movable carrier. When the carrier is a fixed carrier, the robot may transport the containers placed on the carrier. When the carrier is a movable carrier, the robot may also directly transport the carrier. For example, the robot may transport the container or the carrier to a workstation in the warehouse system to perform a picking operation; or, the robot may also transport the picked container or carrier to a storage area to perform a putaway operation.

In some embodiments, the step110 may include: determining at least one finding path for each of the robots to perform the transport task on the map information based on the position information of each of the robots, a task start point and a task end point of the transport task corresponding to each of the robots; and determining the spatial path from the at least one finding path.

In some examples, the transportation task may include the task start point and the task end point. The robot may move from a current position to the task start point based on the transportation task, and, after transporting a target container or a target carrier at the task start point, move a load to the task end point. The task start point may include a position of the task start point, such as start point position coordinates. The task end point may include a position of the task end point, such as end point position coordinates.

For example, when an object to be transported (a container or a carrier) in a storage area needs to be transported to a workstation to perform a picking operation, the task start point is a position of the object to be transported in the storage area, and the task end point is a position of the workstation.

In some examples, in the map information, there may be at least one path (i.e., finding path) for the robot to move from the current position to the task start point, and in a loaded state, move from the task start point to the task end point. For example, after moving to the task start point position (such as the position of the object to be transported), the robot transports the object to be transported from the task start point position, and then moves from the task start point position to the task end point position (such as the position of the workstation). At least one path between the task start point position and the task end point position may be found based on different parameter information.

In some examples, when there is one finding path, the finding path may be determined as the spatial path of the robot. When there is a plurality of finding paths, the spatial path of the robot may be determined from the plurality of finding paths.

For example, the spatial path may be a path with a minimum cost among the at least one finding path, and/or the spatial path may be a path that does not include a predetermined hot area among the at least one finding path.

In some examples, if there are a plurality of finding paths for the robot to perform the transportation task, the control device may determine a path with a minimum cost among the plurality of finding paths as the spatial path for the robot to perform the transportation task. For example, the path with the minimum cost may be a path with a shortest distance among the plurality of finding paths; or, the path with the minimum cost may be a finding path corresponding to a shortest estimated time duration for the robot to drive from the current position to the task end point; or, the path with the minimum cost may also be a finding path corresponding to a shortest estimated time duration for the robot to drive from the task start point to the task end point, which is not limited in the embodiments of the present disclosure.

In other examples, the finding path that does not include the predetermined hot area may also be determined as the spatial path of the robot.

For example, the warehouse system may include at least one predetermined hot area, and the predetermined hot area may be an area in the warehouse that is prone to congestion or deadlock. The predetermined hot area may be a narrow area, a corridor area, a fire passage area, or the like in the warehouse system; or, the predetermined hot area may also be an area in the warehouse with a large robot traffic flow, for example, the predetermined hot area may be determined based on a robot traffic flow and a number of occurrences of congestion over a period of time. It needs to be noted that the predetermined hot area may also be set based on requirements, and the number and setting of the predetermined hot area are not limited in the embodiments of the present disclosure.

In another example, when there is one finding path that does not include the predetermined hot area among the plurality of finding paths, the finding path is determined as the spatial path. When there is a plurality of finding paths that do not include the predetermined hot area among the plurality of finding paths, a finding path with a minimum cost among the plurality of finding paths that do not include the predetermined hot area may be determined as the spatial path for the robot to perform the transportation task.

In the path finding method provided by the embodiments of the present disclosure, by determining, from the at least one finding path for each of the robots to perform the transportation task, the finding path with the minimum cost and/or not including the predetermined hot area as the spatial path of the robot, the traffic efficiency and the transportation efficiency of the robot may be improved.

At step 120, a required resource and a held resource of each of the robots on the spatial path for each of the robots are determined to perform the corresponding transport task based on a current position of each of the robots and a device attribute of each of the robots.

In some examples, after the spatial path of the robot is determined, the control device controls the robot to perform the transportation task based on a corresponding spatial path. During a process of each of the robots driving based on the spatial path, the control device may pre-allocate a pending travel area for the robot on the spatial path based on the current position of the robot. The control device continuously allocates the pending travel area to the robot, so that the robot drives to the task end point based on the spatial path. The pending travel area is a section of a path that the robot needs to pass through next.

For example, the pending travel area may be a section of a path on the spatial path at a predetermined distance, for example, the pending travel area may be a 3-meter section of the path backward from the current position of the robot on the spatial path; or, the pending travel area may also be a section of the path that the robot needs to pass through within a predetermined time window, for example, the pending travel area may be a path that the robot drives in 3 time steps from the current position. The time step is a search unit in a time dimension of the MAPF algorithm. In the MAPF algorithm, one time step is required for the robot to move one grid cell or stay in place for one step.

In some examples, the spatial path may include a plurality of path points, and the pending travel area may include at least one path point. When a point at the current position of the robot is called the current path point, the pending travel area may include a next path point of the current path point. The path point may be in the form of a cell or in the form of a line segment, which is not limited in the embodiments of the present disclosure. The following embodiments use cells to represent points of a pending travel path for exemplary description.

For example, the device attribute of the robot may include at least one of: body size information of the robot, angle information of the robot, size information of a target container or a target carrier carried by the robot, or size information and angle information of the robot when loaded with a target container or a target carrier.

For example, when the robot is unloaded, the device attribute of the robot may include the body size information and the angle information of the robot. When the robot is loaded, the device attribute of the robot may include the size information of the target container or the target carrier loaded by the robot, and the size information and the angle information of the robot when loaded with the target container or the target carrier.

In some examples, envelope information of each of the robots may be determined based on the device attribute of each of the robots. The envelope information of the robot may include a motion envelope and a stationary envelope of the robot.

In some embodiments, the step 120 may include: determining a motion envelope of each of the robots when moving from a current path point corresponding to the current position thereof to a next path point based on the current position of each of the robots, the device attribute of each of the robots, and the spatial path for each of the robots to perform the corresponding transport task; and determining the motion envelope of each of the robots when moving from the current path point to the next path point as the required resource of each of the robots.

In some examples, the motion envelope indicates a spatial resource occupied by an area swept by a motion trajectory of the robot moving along the spatial path from one path point to another path point. For example, the motion envelope may be a spatial resource occupied during a motion process when the robot is unloaded or a spatial resource occupied during a motion process when the robot is loaded.

For example, the current path point and the next path point of each of the robots may be determined based on the current position and the spatial path of each of the robots. Then, according to the device attribute of each of the robots, the motion envelope of each of the robots when moving from the current path point to the next path point is determined, and the motion envelope is determined as the required resource of each of the robots. That is, the required resource of the robot may be a spatial resource that the robot needs to occupy in a next time step.

In some embodiments, the step 120 may further include: determining a stationary envelope of each of the robots when located at the current path point based on the current position of each of the robots and the device attribute of each of the robots; and determining the stationary envelope of each of the robots when located at the current path point as the held resource of each of the robots.

In some examples, the stationary envelope indicates a spatial resource occupied by the robot when it is in a stationary state. If the robot remains stationary at the current path point, the stationary envelope of the robot at the current path point is the held resource of the robot. That is, the held resource of the robot is the spatial resource occupied by the robot at a current time step.

At step 130, a plurality of waiting robot sets among the plurality of robots and waiting relationships among a plurality of waiting robots in each of the waiting robot sets are determined based on the required resource and the held resource of each of the robots.

In some examples, among all the robots in the warehouse system, there may be a plurality of robots with a waiting relationship. The robots with the waiting relationship are called the waiting robots, and a set composed of the waiting robots is called the waiting robot set. It needs to be noted that the plurality of robots in the warehouse system may form at least one waiting robot set, and the plurality of waiting robots in each of the waiting robot sets have the waiting relationship. For example, the plurality of waiting robots in one waiting robot set may be robots with the waiting relationship in a certain area.

For example, one waiting robot set may include at least two waiting robots. A waiting relationship between the at least two waiting robots may be that: at least one robot is required to wait until another robot has moved before proceeding with its own sequential movement, otherwise congestion or deadlock will occur. That is, the plurality of waiting robots includes a waiting robot and a waited-for robot. The waited-for robot blocks a drive of the waiting robot, and the waiting robot may continue to drive only after the waited-for robot moves.

In some embodiments, the step 130 may include: in a case that an intersection exists between a required resource of any first robot among the plurality of robots and a held resource of a second robot, determining the first robot and the second robot as the waiting robots, and adding the first robot and the second robot to a same waiting robot set; and determining the waiting relationship between the first robot and the second robot as the first robot waiting for the second robot.

In some examples, among the plurality of robots, in a case that the intersection exists between the required resource of any robot (e.g., referred to as first robot) and the held resource of another robot (e.g., second robot), the first robot and the second robot are determined as waiting robots, and the first robot and the second robot are added to the same waiting robot set. For example, when a next path point of the first robot (i.e., required resource) is a current path point of the second robot (i.e., held resource), the first robot and the second robot are waiting robots, and the second robot may block the drive of the first robot, and the first robot is required to wait until the second robot has moved before proceeding with its sequential movement.

For example, when there is a third robot among the plurality of robots, if the second robot needs to wait for the third robot to move before it may move, it is determined that there is a waiting relationship between the second robot and the third robot. Since there is the waiting relationship between the first robot and the second robot, and there is also the waiting relationship between the second robot and the third robot, the first robot, the second robot, and the third robot may be added to a waiting robot set; or, if the third robot needs to wait for the first robot to move before it may move, it is determined that there is a waiting relationship between the third robot and the first robot. Since there is also the waiting relationship between the first robot and the second robot, the first robot, the second robot, and the third robot may be added to a waiting robot set. The third robot is different from the first robot and the second robot. That is, a plurality of robots with the waiting relationship may be added to a waiting robot set.

In some examples, if the required resource of the first robot includes the held resource of the second robot, the second robot may affect a continued drive of the first robot, and the first robot needs to wait for the second robot to pass through the held resource before it may continue to drive, so as to avoid a conflict with the second robot. Therefore, the waiting relationship between the first robot and the second robot is the first robot waiting for the second robot.

In some examples, since the warehouse system includes a plurality of types of robots, and the sizes of different types of robots may be different, or the sizes of grids (e.g., a grid may be a path point) in the grid map of the warehouse system may be different, when applying for the required resource (e.g., next path point) for each of the robots, the required resource of the robot may be occupied by another robot, or may be occupied by a plurality of (e.g., two) other robots. That is, in the embodiments of the present disclosure, the required resource of any robot may have the intersection with the held resource of another robot, or may intersect with the held resources of a plurality of other robots, which is not limited in the embodiments of the present disclosure.

FIG. 2 is a schematic diagram of a waiting scenario according to some embodiments of the present disclosure. As shown in FIG. 2, there is a waiting relationship among a robot R11, a robot R12, a robot R13, a robot R14, and a robot R15; and there is a waiting relationship among a robot R21, a robot R22, and a robot R23.

As shown in FIG. 2, at the current moment, if a required resource of the robot R11 is a motion envelope from a path point B2 to a path point C2, and a held resource of the robot R12 is a stationary envelope of the robot R12 located at the path point C2, then an intersection exists between the required resource of the robot R11 and the held resource of the robot R12. Therefore, the robot R11 and the robot R12 are waiting robots, that is, there is a waiting relationship between the robot R11 and the robot R12, and the robot R11 and the robot R12 may be added to a first waiting robot set.

Since the required resource of the robot R12 is a motion envelope from the path point C2 to a path point D2, and a held resource of the robot R13 is a stationary envelope of the robot R13 located at the path point D2, an intersection exists between the required resource of the robot R12 and the held resource of the robot R13. Therefore, the robot R13 is also a waiting robot, that is, there is a waiting relationship among the robot R11, the robot R12, and the robot R13, and the robot R13 may be added to the first waiting robot set. By analogy, the plurality of waiting robots with the waiting relationship in the first waiting robot set may include the robot R11, the robot R12, the robot R13, the robot R14, and the robot R15.

In some examples, in the first waiting robot set, the waiting relationships among the waiting robots are: the robot R11 waiting for the robot R12, the robot R12 waiting for the robot R13, the robot R13 waiting for the robot R14, and the robot R14 waiting for the robot R15. Since the required resource of the robot R15 does not have an intersection with the held resources of other robots, the robot R15 does not need to wait and may continue to drive.

As shown in FIG. 2, at the current moment, there is also a waiting relationship among the robot R21, the robot R22, and the robot R23 in another area. The robot R21, the robot R22, and the robot R23 are also waiting robots, and the robot R21, the robot R22, and the robot R23 may be added to a second waiting robot set. That is, the plurality of waiting robots with the waiting relationship in the second waiting robot set may include the robot R21, the robot R22, and the robot R23.

In some examples, in the second waiting robot set, the waiting relationships among the waiting robots are: the robot R21 waiting for the robot R22, and the robot R22 waiting for the robot R23. Since the required resource of the robot R23 does not have the intersection with the held resources of other robots, the robot R23 does not need to wait and may continue to drive.

As shown in FIG. 2, the first waiting robot set and the second waiting robot set may be different waiting robot sets composed of the plurality of waiting robots with a waiting relationship in different areas at the same moment.

In some embodiments, the waiting robot set does not include a robot that is deadlocked, that is, the plurality of waiting robots in the waiting robot set will not be deadlocked with each other.

For example, if an intersection exists between a required resource of any first robot among the plurality of robots and a held resource of a second robot, and the required resource of the second robot does not have an intersection with a held resource of the first robot, the first robot and the second robot are determined as waiting robots.

In some examples, when the intersection exists between the required resource of the first robot and the held resource of the second robot, and the intersection also exists between the required resource of the second robot and the held resource of the first robot, it indicates that a deadlock occurs between the first robot and the second robot. In this case, the first robot and the second robot may not be added to the waiting robot set.

That is, when there is a waiting relationship between two robots (e.g., robot R1 and robot R2) in the waiting robot set, a waiting relationship between the robot R1 and the robot R2 is either the robot R1 waiting for the robot R2 or the robot R2 waiting for the robot R1. The waiting relationship between the robot R1 and the robot R2 may not be the robot R1 waiting for the robot R2 and the robot R2 waiting for the robot R1. In this case, a deadlock occurs between the robot R1 and the robot R2.

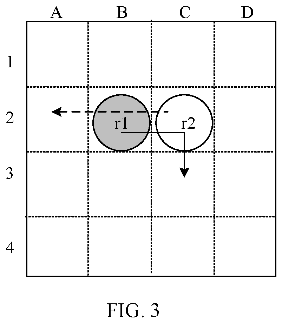

FIG. 3 is a schematic diagram of a deadlock scenario according to some embodiments of the present disclosure.

As shown in FIG. 3, a spatial path of a robot r1 is (B2, C2, C3), and a spatial path of a robot r2 is (C2, B2, A2). As shown in FIG. 3, at the current moment, a required resource of the robot r1 is a motion envelope from a path point B2 to a path point C2, and a held resource of the robot r2 is a stationary envelope of the robot r2 at the path point C2. Therefore, an intersection exists between the required resource of the robot r1 and the held resource of the robot r2, and a waiting relationship between the robot r1 and the robot r2 is the robot r1 waiting for the robot r2. At the same time, the required resource of the robot r2 is to move from the path point C2 to the path point B2, and the held resource of the robot r1 is a stationary envelope of the robot r1 located at the path point B2. Therefore, the intersection also exists between the required resource of the robot r2 and the held resource of the robot r1, and the waiting relationship between the robot r1 and the robot r2 is the robot r2 waiting for the robot r1. That is, when the robot r1 waits for the robot r2, and the robot r2 also waits for the robot r1, a deadlock occurs between the robot r1 and the robot r2.

In some examples, when the deadlock occurs between the robot r1 and the robot r2, the robot r1 and the robot r2 will wait indefinitely, and deadlocked robots may not resolve the deadlock via waiting. Therefore, in the embodiments of the present disclosure, the deadlocked robots are excluded from the waiting robot set, that is, the waiting robots in the waiting robot set may resolve the conflict that occurs via waiting.

In some examples, if there are three or more robots forming a deadlock loop of head-to-tail waiting, the deadlocked robots may be excluded from the waiting robot set.

It needs to be noted that, in the embodiments of the present disclosure, robots with the waiting relationship may be a plurality of robots queuing at a workstation or in an aisle.

At step 140, a spatiotemporal path of each of the waiting robots is obtained by adding a driving state corresponding to at least one time node to a spatial path of each of the waiting robots based on the waiting relationships among the plurality of waiting robots in each of the waiting robot sets, and each of the waiting robots is controlled to perform the transport task based on the spatiotemporal path.

For example, the driving state includes driving or waiting. That is, the control device may add a waiting action or a driving action corresponding to the at least one time node on the spatial path of each of the waiting robots, to obtain the spatiotemporal path of each of the waiting robots.

In some examples, a spatial path of each robot may include a plurality of path points, and each of the path points may correspond to a driving state of the at least one time node. The time node may be a time step.

For example, continue to refer to FIG. 2, the waiting relationships among the robot R21, the robot R22, and the robot R23 are the robot R21 waiting for the robot R22, and the robot R22 waiting for the robot R23. Therefore, at a current time node (time node 0), a driving state of the robot R21 at a path point B5 is waiting, a driving state of the robot R22 at a path point C5 is also waiting, and a driving state of the robot R23 at a path point D5 is driving, that is, the robot R23 moves from the path point D5 to a path point E5. When arriving at a time node 1, since the robot R23 moves from the path point D5 to the path point E5, the path point D5 is idle. Therefore, the driving state of the robot R22 at the path point C5 is driving, that is, the robot R22 moves from the path point C5 to the path point D5. The driving state of the robot R21 at the path point B5 is waiting. When arriving at a time node 2, since the robot R22 moves from the path point C5 to the path point D5, the path point C5 is idle. Therefore, the driving state of the robot R21 at the path point B5 is driving, that is, the robot R21 moves from the path point B5 to the path point C5.

That is, at the path point B5, the robot R21 adds a driving state of waiting at the time node 0, adds a driving state of waiting at time node 1, and adds a driving state of driving at time node 2. At the path point C5, the robot R22 adds a driving state of waiting at time node 0, and adds a driving state of driving at time node 1. At the path point D5, the robot R23 adds a driving state of driving at time node 0. In this case, each waiting robot will not have an envelope conflict at each time node, thus reducing the occurrence of congestion or deadlock among the waiting robots.

It needs to be noted that, in the embodiments of the present disclosure, the driving state of the waiting robot being driving indicates that the waiting robot drives from the current path point to a next path point of the current path point.

Therefore, after the spatiotemporal path of each of the waiting robots is determined, the control device may control each of the waiting robots to perform the transportation task based on its corresponding spatiotemporal path, thus reducing the occurrence of congestion among the waiting robots.

In the path finding method provided by the embodiments of the present disclosure, by adding the waiting action and the driving action on the spatial path of each of the waiting robots, the spatial path is converted into the spatiotemporal path, thus reducing the occurrence of congestion or deadlock among the waiting robots in the waiting robot set and improving the traffic efficiency of each of the waiting robots.

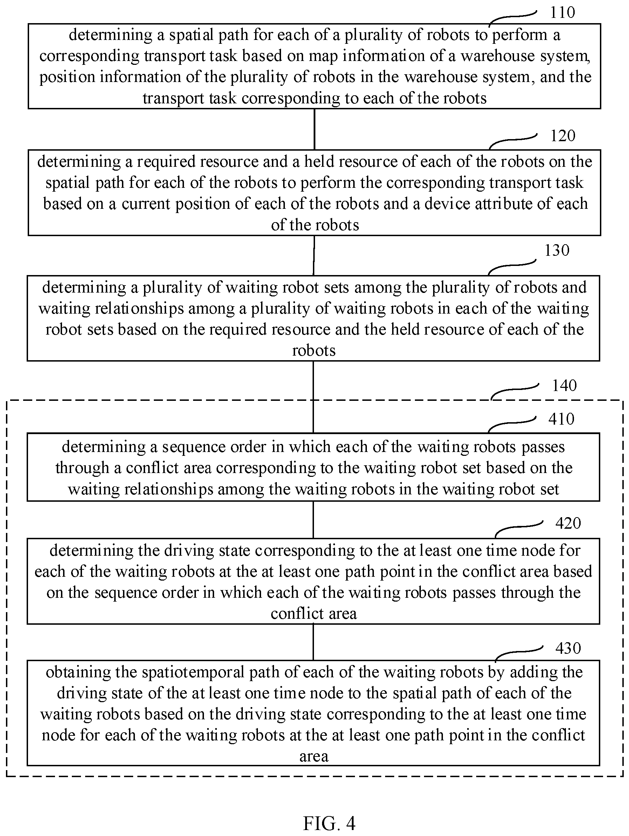

FIG. 4 is a schematic diagram of another path finding method according to some embodiments of the present disclosure. As shown in FIG. 4, the step 140 includes steps 410 to 430 as shown below.

At step 410, a sequence order in which each of the waiting robots passes through a conflict area corresponding to the waiting robot set is determined based on the waiting relationships among the waiting robots in the waiting robot set.

In some examples, the conflict area corresponding to the waiting robot set may include a conflict area between any two robots with a waiting relationship. For example, if there is the waiting relationship between the first robot and the second robot, the conflict area between the first robot and the second robot is an area where an intersection exists between a required resource of the first robot and a held resource of the second robot.

For example, the conflict area corresponding to the waiting robot set may include at least one sub-conflict area, and the sub-conflict area is an area where a conflict occurs between two waiting robots with a waiting relationship in the waiting robot set. As shown in FIG. 2, in the second waiting robot set, a first sub-conflict area between the robot R21 and the robot R22 is an area corresponding to an intersection between a motion envelope of the robot R21 moving from the path point B5 to the path point C5 and a stationary envelope of the robot R22 at the path point C5. A second sub-conflict area between the robot R22 and the robot R23 is an area corresponding to an intersection between a motion envelope of the robot R22 moving from the path point C5 to the path point D5 and a stationary envelope of the robot R23 at the path point D5. The conflict area corresponding to the second waiting robot set includes the first sub-conflict area and the second sub-conflict area.

In some examples, the sequence order in which each of the waiting robots passes through the conflict area may be determined based on the waiting relationships among the waiting robots.

For example, when the waiting relationship between the first robot and the second robot is the first robot waiting for the second robot, a sequence order in which the first robot and the second robot pass through the conflict area is that the second robot passes through first, and the first robot waits at the current path point and passes through the conflict area after the second robot passes through.

In the path finding method provided by the embodiments of the present disclosure, by determining the sequence order in which each of the waiting robots passes through the conflict area may be determined based on the waiting relationships among the waiting robots, the waiting robots may be controlled to pass through the conflict area in sequence based on the sequence order, thus reducing the occurrence of congestion and deadlock among the waiting robots and improving the traffic efficiency of each of the waiting robots.

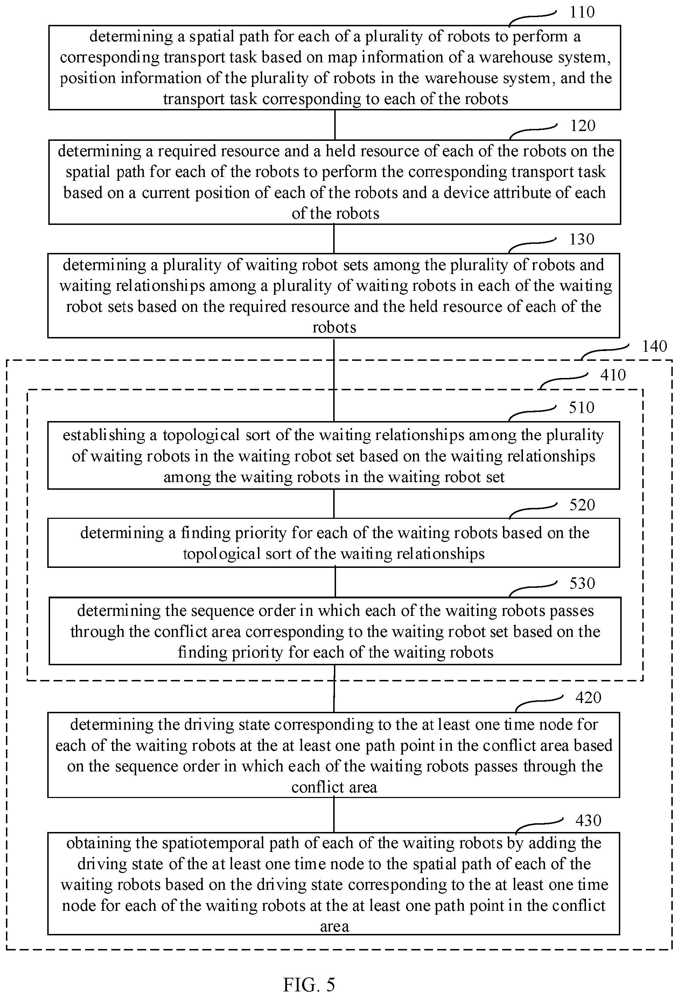

FIG. 5 is a schematic diagram of another path finding method according to some embodiments of the present disclosure. As shown in FIG. 5, the step 410 includes steps 510 to 530 as shown below.

At step 510, a topological sort of the waiting relationships among the plurality of waiting robots in the waiting robot set is established based on the waiting relationships among the waiting robots in the waiting robot set.

In some examples, one topological sort of the waiting relationships may be established for each of the waiting robot sets.

In some embodiments, the step 510 may include: constructing a directed acyclic graph (DAG), in which each of the waiting robots in the waiting robot set serves as a vertex and the waiting relationships among the waiting robots serve as an edge; and obtaining the topological sort of the waiting relationships by arranging the waiting robots corresponding to each of the vertices of the directed acyclic graph into a linear sequence.

In some examples, a topological sorting algorithm may be used based on the waiting relationship among the waiting robots in the waiting robot set to determine the topological sort of the waiting relationships corresponding to each of the waiting robot sets.

For example, the directed acyclic graph is constructed with each of the waiting robots in the waiting robot set as the vertex, and the waiting relationship among the waiting robots as the edge. In the directed acyclic graph, each vertex (i.e., waiting robot) may appear only once. If one of two waiting robots waits for the other robot, then the robot is behind the other robot.

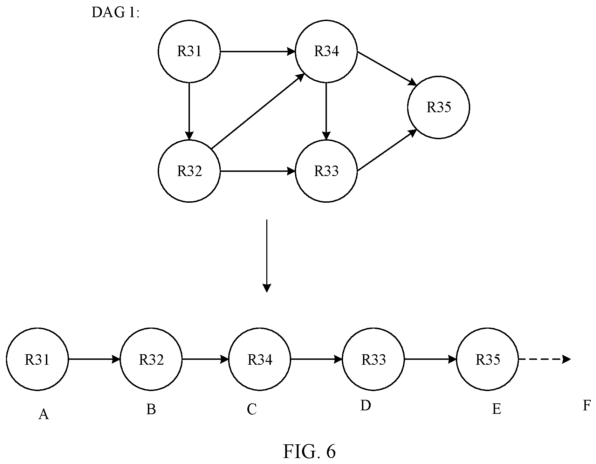

FIG. 6 is a schematic diagram of a directed acyclic graph according to some embodiments of the present disclosure.

As shown in FIG. 6, one waiting robot set (e.g., third waiting robot set) includes 5 waiting robots, namely robots R31 to R35. For example, taking the third waiting robot set as an example, an intersection exists between a required resource of the robot R31 and held resources of the robot R32 and the robot R34, an intersection exists between the required resource of the robot R32 and held resources of the robot R33 and the robot R34 and an intersection exists among a required resource of the robot R34 and held resources of the robot R33 and the robot R35, and an intersection exists between a required resource of the robot R33 and a held resource of the robot R35. Then the waiting relationships among the plurality of robots in the third waiting robot set are: the robot R31 waiting for the robot R32 and the robot R34, the robot R32 waiting for the robot R33 and the robot R34, the robot R33 waiting for the robot R35, the robot R34 waiting for the robot R33 and the robot R35, and the robot R35 not needing to wait for other robots.

In some examples, when creating a directed acyclic graph DAG 1, the robots R31 to R35 are respectively used as vertices. Since the robot R31 waits for the robot R32 and the robot R34, an edge between the robot R31 and the robot R32 may be determined as the robot R31 pointing to the robot R32, and an edge between the robot R31 and the robot R34 may be determined as the robot R31 pointing to the robot R34. By analogy, since the robot R32 waits for the robot R33 and the robot R34, an edge between the robot R32 and the robot R33 may be determined as the robot R32 pointing to the robot R33, and an edge between the robot R32 and the robot R34 may be determined as the robot R32 pointing to the robot R34. Since the robot R33 waits for the robot R35, an edge between the robot R33 and the robot R35 may be determined as the robot R33 pointing to the robot R35. Since the robot R34 waits for the robot R33 and the robot R35, an edge between the robot R34 and the robot R33 may be determined as the robot R34 pointing to the robot R33, and an edge between the robot R34 and the robot R35 may be determined as the robot R34 pointing to the robot R35. Therefore, a directed acyclic graph DAG 1 corresponding to the third waiting robot set as shown in FIG. 6 may be obtained.

For example, after the directed acyclic graph corresponding to the waiting robot set is determined, the topological sort of the waiting relationships may be obtained by arranging the waiting robots at each vertex into a linear sequence based on the directed acyclic graph.

For example, the topological sort of the waiting relationships corresponding to the third waiting robot set may be obtained via the following steps.

Step 1: Select a vertex without a predecessor from the directed acyclic graph (e.g., DAG 1) and output it.

For example, the vertex without the predecessor may also be called a vertex with an in-degree of 0. In the directed acyclic graph (e.g., DAG 1), edges connected to the vertex with the in-degree of 0 all take the vertex as a start point, and the vertex with the in-degree of 0 will not be the end point of any edge.

As shown in DAG 1 in FIG. 6, edges connected to the robot R31 all take the robot R31 as a start point, and the robot R31 will not be the end point of any edge, that is, the robot R31 only waits for other robots and is not waited for by other robots. Therefore, the robot R31 may be a vertex without the predecessor in DAG 1, and the robot R31 is output.

Step 2: Delete the vertex and all directed edges taking the vertex as a start point from the directed acyclic graph, to obtain an updated directed acyclic graph.

For example, as shown in FIG. 6, the vertex without the predecessor in DAG 1 is the robot R31. After deleting the robot R31, the edge between the robot R31 and the robot R32, and the edge between the robot R31 and the robot R34 from DAG 1, a first updated directed acyclic graph may be obtained.

Step 3: Repeat step 1 and step 2 on the updated directed acyclic graph until the directed acyclic graph is empty.

For example, after obtaining the first updated directed acyclic graph by performing step 2, the vertex without the predecessor in the first updated directed acyclic graph is output, i.e., robot R32, and the vertex without the predecessor, the robot R32, and edges connected to the robot R32 are deleted from the first updated directed acyclic graph, thus obtaining a second updated directed acyclic graph. By analogy, repeat steps 1 to 2 until the directed acyclic graph is empty.

In some examples, after the directed acyclic graph is empty, a linear sequence 1: {robot R31, robot R32, robot R34, robot R33, robot R35} may be obtained based on an output order of the vertices without the predecessor.

For example, based on the linear sequence corresponding to the waiting robot set, a topological sort of the waiting relationships corresponding to the waiting robot set is determined.

In some examples, the topological sort of the waiting relationships may be a reverse sequence of the linear sequence formed by the waiting robots of the vertices in the directed acyclic graph. For example, the topological sort of the waiting relationships corresponding to the third waiting robot set may be a reverse sequence of the linear sequence 1, that is, the topological sort of the waiting relationships is: {robot R35, robot R33, robot R34, robot R32, robot R31}.

At step 520, a finding priority for each of the waiting robots is determined based on the topological sort of the waiting relationships.

For example, after obtaining the topological sort of the waiting relationships corresponding to each of the waiting robot sets, the finding priority for each of the waiting robots in the waiting robot set may be determined.

In some examples, the finding priority for each of the waiting robots is positively correlated with an order of each of the waiting robots in the topological sort of the waiting relationships. That is, the earlier a position of the waiting robot in the topological sort of the waiting relationships, the higher a finding priority of the waiting robot; and the later the position of the waiting robot in the topological sort of the waiting relationships, the lower the finding priority of the waiting robot.

For example, the topological sort of the waiting relationships corresponding to the third waiting robot set is {robot R35, robot R33, robot R34, robot R32, robot R31}. Then it may be determined that in the third waiting robot set, finding priorities of the robot R35, the robot R33, the robot R34, the robot R32, and the robot R31 are from high to low in sequence, with the robot R35 having a highest finding priority and the robot R31 having a lowest finding priority.

At step 530, the sequence order in which each of the waiting robots passes through the conflict area corresponding to the waiting robot set is determined based on the finding priority for each of the waiting robots.

In some examples, after determining the finding priority for each of the waiting robots in the waiting robot set, the sequence order in which each of the waiting robots passes through the conflict area may be further determined. For example, the sequence order in which each of the waiting robots pass through the conflict area is positively correlated with the finding priority for each of the waiting robots. That is, the higher the finding priority for the waiting robot, the earlier the waiting robot may pass through the conflict area.

In some examples, a waiting robot with a lower finding priority waits at the current path point, and, after a waiting robot with a higher finding priority (i.e., a waiting robot with a finding priority higher than its finding priority) passes through the conflict area, the waiting robot with the lower finding priority then passes through the conflict area. For example, the robot R34 may wait at the current path point, and, after the robot R35 passes through the conflict area, the robot R34 then moves to a next path point, thus avoiding a conflict.

At step 420, the driving state corresponding to the at least one time node for each of the waiting robots at the at least one path point in the conflict area is determined based on the sequence order in which each of the waiting robots passes through the conflict area.

At step 430, the spatiotemporal path of each of the waiting robots is obtained by adding the driving state of the at least one time node to the spatial path of each of the waiting robots based on the driving state corresponding to the at least one time node for each of the waiting robots at the at least one path point in the conflict area.

For example, after determining the sequence order in which each of the waiting robots in the waiting robot sets passes through its corresponding conflict area, it may be determined that the driving state of each of the waiting robots on the at least one path point in the conflict area at the at least one time node is waiting or driving.

In some examples, in the same waiting robot set, the conflict areas where the waiting robots conflict on their spatial paths may be different.

For example, as shown in FIG. 6, in the third waiting robot set, at the current time node (e.g., time node 0), the robot R35 moves from a path point E to a next path point F, and the robot R31, the robot R32, the robot R34, and the robot R33 wait at their respective current path points at time node 0. Upon reaching the time node 1, after the robot R35 moves to the path point F, the path point E is idle, and the robot R33 may move from a path point D to the next path point E, while the robot R31, the robot R32, and the robot R34 still wait at their respective current path points. Upon reaching time node 2, after the robot R33 moves to the path point E, the path point D is idle, and the robot R34 may move from the path point C to the path point D, while the robot R31 and the robot R32 continue to wait at their respective current path points. At the scheduled time node 3, after the robot R34 moves to the path point D, the path point C is idle, and the robot R32 may move from a path point B to the next path point C, while the robot R31 continues to wait at a current path point A. At the scheduled time node 4, the robot R32 moves to the path point C, the robot R31 may move from the path point A to the next path point B.

Therefore, in the above process, at the path point A, driving states of the robot R31 from time node 0 to time node 3 are all waiting, and a driving state of the robot R31 at time node 4 is driving. Similarly, at the path point B, driving states of the robot R32 from time node 0 to time node 2 are all waiting, and a driving state of the robot R32 at time node 3 is driving. At the path point C, driving states of the robot R34 from time node 0 to time node 1 are all waiting, and a driving state of the robot R34 at time node 2 is driving. At the path point D, a driving state of the robot R33 at time node 0 is waiting, and a driving state of the robot R33 at time node 1 is driving. At the path point E, a driving state of the robot R35 at time node 0 is driving.

It needs to be noted that, starting from time node 1, the robot R35 may continue to move along its corresponding spatial path. If a new waiting relationship with other robots occurs again during the movement, reference may be made to the above steps for processing.

In some examples, the spatial path of each of the waiting robots may be converted into the spatiotemporal path by adding waiting actions or continuing driving actions corresponding to different time nodes at different path points on the spatial path of the waiting robots. Each of the waiting robots passes through the conflict area by waiting based on the sequence order, thus avoiding conflicts with other waiting robots.

In the path finding method provided by the embodiments of the present disclosure, the spatial path for each of the plurality of robots to perform the corresponding transport task is determined based on the map information, the position information of the plurality of robots, and the transport task corresponding to each of the robots; the required resource and the held resource of each of the robots on the spatial path for each of the robots are determined based on the current position of each of the robots and the device attribute of each of the robots; the plurality of waiting robot sets and waiting relationships among the plurality of waiting robots in each of the waiting robot sets are determined based on the required resource and the held resource of each of the robots. Finally, the spatiotemporal path of each of the waiting robots is obtained by adding the driving state corresponding to the at least one time node to the spatial path of each of the waiting robots based on the waiting relationships among the plurality of waiting robots in each of the waiting robot sets, and each of the waiting robots to perform the transport task based on the spatiotemporal path is controlled, in which the driving state includes driving or waiting. The embodiments of the present disclosure are based on the spatial path of each of the robots, and by adding the driving state (waiting or driving) at each time node on the spatial path of each of the waiting robots with the waiting relationship, the spatial path of each of the waiting robots is converted into the spatiotemporal path. This enables conflict decision-making while allocating the required resource to the robots, thus avoiding congestion and deadlock among the plurality of waiting robots, reducing the computational complexity of the system, and accelerating the computation speed.

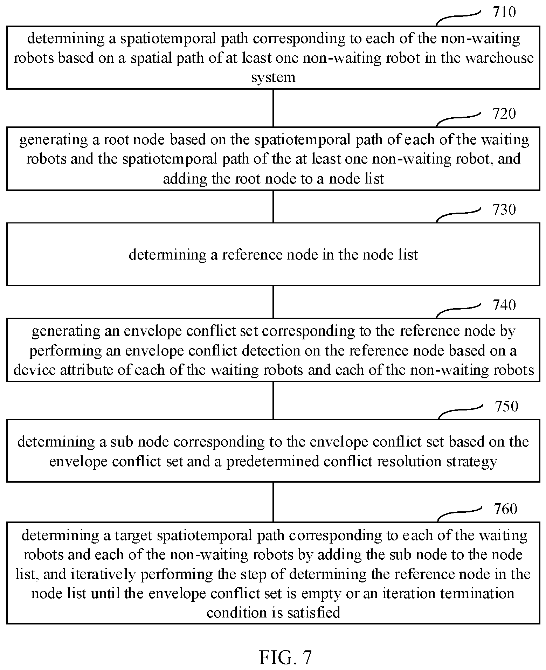

FIG. 7 is a schematic diagram of another path finding method according to some embodiments of the present disclosure. As shown in FIG. 7, after step 140, the method further includes steps 710 to 760 as shown below.

At step 710, a spatiotemporal path corresponding to each of the non-waiting robots is determined based on a spatial path of at least one non-waiting robot in the warehouse system.

In some examples, the non-waiting robot is a robot in the warehouse system other than the waiting robot and the deadlocked robot. There is no waiting relationship among the non-waiting robots, and there is no waiting relationship between the non-waiting robot and the waiting robot.

In some examples, the manner of determining the spatial path of each of the non-waiting robots is similar to the manner of determining the spatial path of the waiting robot in the above embodiments (e.g., step 110). To avoid repetition, details are not described here again. After obtaining the spatial path of each of the non-waiting robots, the spatiotemporal path of each of the non-waiting robots may be determined based on the spatial path of each of the non-waiting robots.

For example, the spatiotemporal path of the non-waiting robot has no waiting state, that is, the non-waiting robot may drive from the current path point to the next path point at each time node. Therefore, the spatiotemporal path of the non-waiting robot is an initial spatiotemporal path state that does not consider a path conflict.

For example, there may be conflicts among the spatiotemporal paths of the non-waiting robots, and between the spatiotemporal path of the non-waiting robot and the spatiotemporal path of the waiting robot.

At step 720, a root node is generated based on the spatiotemporal path of each of the waiting robots and the spatiotemporal path of the at least one non-waiting robot, and the root node is added to a node list.

It needs to be noted that, in the following embodiments, the waiting robot and the non-waiting robot may be collectively referred to as candidate robots, and the spatiotemporal path of the waiting robot and the spatiotemporal path of the non-waiting robot may be collectively referred to as initial spatiotemporal paths.

In some examples, after obtaining an initial spatiotemporal path of each of the candidate robots, the root node is generated based on the initial spatiotemporal path, and the root node is added to the node list. For example, the root node refers to a search node corresponding to the initial spatiotemporal path, and the root node includes the initial spatiotemporal path of each of the candidate robots.

In some examples, nodes in the node list may be sorted based on node information of each node in the node list. The node information includes path information and conflict information corresponding to the node.

For example, the path information includes a cost of each path, and the cost of each path may be a driving time required for each of the candidate robots to drive on the path or a length of the path. The conflict information is information on a number of envelope conflicts existing in each path. For example, when sorting the nodes in the node list, a node with a smallest number of envelope conflicts and/or a smallest path cost may be prioritized.

At step 730, a reference node is determined in the node list.

For example, the reference node is a node with a minimum cost in the node list. In some examples, after obtaining the node list, the node with the minimum cost may be taken out from the node list as a current solution.

At step 740, an envelope conflict set corresponding to the reference node is generated by performing an envelope conflict detection on the reference node based on a device attribute of each of the waiting robots and each of the non-waiting robots.

Due to different spatial environments in the warehouse system, motion trajectories of robots operating in different spatial environments are relatively complex, and sizes of various materials transported by the robots vary greatly. Therefore, conflicts in body trajectories are prone to occur among the robots, thus competing for spatial resources, causing low transportation efficiency, path congestion, and deadlock problems.

In order to solve the above problems, the motion envelope of each of the candidate robots may be determined according to the device attribute of each of the candidate robots, and the envelope conflict detection may be performed on the reference node based on the motion envelope of each of the candidate robots, to determine whether the reference node has an envelope conflict.

It needs to be noted that the device attribute of each of the candidate robots includes at least one of: body size information and angle information of the candidate robot, size information of a container or a carrier loaded by the candidate robot, or size information and angle information of the candidate robot when loading a container or a carrier.

In some embodiments, the step 740 may include: based on the device attributes of the waiting robots and the non-waiting robots, determining a motion envelope of the waiting robot and a motion envelope of the non-waiting robot within a predetermined time window; and in a case that there is an envelope conflict between the motion envelope of the waiting robot and the motion envelope of the non-waiting robot at the same time step within the predetermined time window, adding the envelope conflict to the envelope conflict set.

In some examples, if a conflict detection time is long, a computational amount of the conflict detection will increase, and the accuracy of the conflict detection will also be affected. Therefore, in order to improve the efficiency and accuracy of the conflict detection, a time window may be set to perform the conflict detection on each node, so as to reduce the computational amount of the conflict detection.

For example, the predetermined time window may be a predetermined time range for the conflict detection, and a size of the predetermined time window may be customized based on actual application situations, which is not limited in the embodiments of the present disclosure.

In some examples, a first candidate robot and a second candidate robot are any two robots among the plurality of candidate robots in the warehouse system. For example, the first candidate robot may be a waiting robot, and the second candidate robot may be a non-waiting robot; or, both the first candidate robot and the second candidate robot may be non-waiting robots; or, both the first candidate robot and the second candidate robot may be waiting robots, which is not limited in the embodiments of the present disclosure. For example, if the motion envelope of the first candidate robot has an envelope intersection with the motion envelope of the second candidate robot at the same time step within the predetermined time window, it is determined that there is an envelope conflict between the first candidate robot and the second candidate robot, and the envelope conflict is added to the envelope conflict set. If the motion envelope of the first candidate robot does not have an envelope intersection with the motion envelope of the second candidate robot at the same time step within the predetermined time window, it is determined that there is no envelope conflict between the first candidate robot and the second candidate robot.

At step 750, a sub node corresponding to the envelope conflict set is determined based on the envelope conflict set and a predetermined conflict resolution strategy.

In some examples, after determining the envelope conflict set corresponding to the reference node, the envelope conflict with an earliest occurrence time may be determined from the envelope conflict set in the node list as a target envelope conflict. Based on the target envelope conflict, the sub node corresponding to the envelope conflict set is generated. The sub node may eliminate the target envelope conflict in the envelope conflict set.

For example, the predetermined conflict resolution strategy includes waiting and continuing driving. In some examples, the predetermined conflict resolution strategy may determine a sub node corresponding to resolving the target envelope conflict. A sub node refers to a node obtained by, based on a target envelope conflict node, eliminating the envelope conflict between a candidate robot with a lower finding priority and a candidate robot with a higher finding priority by making the candidate robot with the lower finding priority wait and the candidate robot with the higher finding priority pass through first. The sub node does not change the spatial path of each of the candidate robots, and adds a driving state (such as waiting or driving) of at least one time node on the basis of the spatial path to eliminate the envelope conflict.

In the path finding method provided by the embodiments of the present disclosure, based on the envelope conflicts among the candidate robots, the spatiotemporal paths of the candidate robots with the envelope conflict are repaired and adjusted, thus eliminating the envelope conflicts among the candidate robots.

At step 760, a target spatiotemporal path corresponding to each of the waiting robots and each of the non-waiting robots is determined by adding the sub node to the node list, and iteratively performing the step of determining the reference node in the node list until the envelope conflict set is empty or an iteration termination condition is satisfied.

For example, after determining the target spatiotemporal path corresponding to each of the waiting robots and each of the non-waiting robots, each of the waiting robot and each of the non-waiting robot may be controlled to perform the transportation task based on the corresponding target spatiotemporal path.

In some examples, after adding the sub node to the node list, an updated node list is obtained, and S730 is continued to be performed on the updated node list, that is, steps 730 to 760 are iteratively performed until the envelope conflict set is empty or the iteration termination condition is satisfied.

For example, if the envelope conflict set is empty, it indicates that there is no envelope conflict among spatiotemporal paths corresponding to the reference node within a time window range, and a spatiotemporal path corresponding to the reference node may be determined as an optimal path of each of the candidate robots, that is, the target spatiotemporal path corresponding to each of the candidate robots.

In some embodiments, the iteration termination condition includes at least one of: the node list being empty, an iteration time exceeding a predetermined time threshold, or an iteration count exceeding a predetermined count threshold.

In some examples, during the execution of the above steps, a situation of no solution may occur. For example, when the iteration termination condition is satisfied and the optimal path of each of the candidate robots is not found, it is determined that there is no solution. The no solution may indicate that a node with an empty envelope conflict set is not found within a limited iteration time (i.e., predetermined time threshold) or a limited iteration count (i.e., predetermined count threshold), that is, the optimal path of each of the candidate robots may not be obtained; or, the no solution may also indicate that within the predetermined time threshold (i.e., predetermined iteration time) or the predetermined count threshold (i.e., predetermined iteration count), the envelope conflicts among the plurality of candidate robots may not be resolved, that is, a corresponding sub node may not be generated, thus resulting in an empty node list.

For example, if the iteration termination condition is satisfied and the optimal path of each of the candidate robots is not found, the node with the minimum cost may be used as a suboptimal node, and a spatiotemporal path corresponding to the suboptimal node is determined as a suboptimal path of each of the candidate robots, that is, the target spatiotemporal path corresponding to each of the candidate robots. The minimum cost may be a minimum conflict and/or a shortest distance. For example, a node with the lowest cost may be selected as the suboptimal node from the nodes that have already expanded the sub node and the nodes that have not expanded the sub node in the node list.

It needs to be noted that, in the case of no solution, the returned suboptimal path may have conflicts or deadlocks. When a conflict occurs, conflict processing may be performed based on the traffic priority among the robots. When a deadlock occurs, other modules in the cluster scheduling system (such as deadlock resolution module) may assist in resolving the deadlock. The embodiments of the present disclosure do not limit this.

In the path finding method provided by the embodiments of the present disclosure, the MAPF algorithm is optimized, which solves the problem that when the MAPF algorithm is used, during low-level path searching, the robot may move from a current point to any adjacent point or stay in place, resulting in a large path search space and slow computation speed. The embodiments of the present disclosure are based on the spatial path of each of the robots obtained via the distributed finding, and convert the spatial paths into spatiotemporal paths without changing the spatial paths of the robots. During low-level path searching, the robot only moves to the next path point in the spatial path or waits at the current path point, which reduces the path search space and improves the computation speed. At the same time, the benefit of the right-of-way allocation is further improved, the deadlock and congestion among the plurality of robots are reduced and the traffic efficiency is improved.

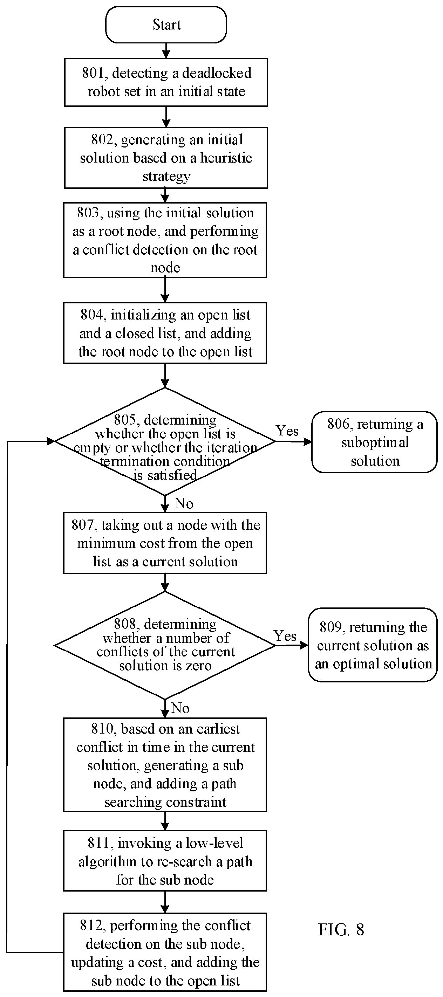

FIG. 8 is a schematic diagram of another path finding method according to some embodiments of the present disclosure. As shown in FIG. 8, the path finding method includes steps 801 to 812 as shown below.

At step 801, a deadlocked robot set in an initial state is detected.

For example, a robot that is deadlocked is determined among the plurality of robots, and the deadlocked robot is added to the deadlocked robot set.

At step 802, an initial solution is generated based on a heuristic strategy.

It needs to be noted that the process of generating the initial solution based on the heuristic strategy is similar to the process of determining the spatiotemporal path of the waiting robots with the waiting relationship in the above embodiments (i.e., steps 110 to 140). To avoid repetition, details are not described here again.

At step 803, the initial solution is used as a root node, and a conflict detection is performed on the root node.

It needs to be noted that the initial solution includes the spatiotemporal paths of the waiting robots and the spatiotemporal paths of the at least one non-waiting robot, and the root node is generated based on the spatiotemporal paths of the waiting robots and the spatiotemporal paths of the at least one non-waiting robot. Step 803 is similar to step 720 in the above embodiments. To avoid repetition, details are not described here again.

At step 804, an open list and a closed list are initialized, and the root node is added to the open list.

For example, high-level nodes whose adjacent points have not been expanded may be stored in order in the open list. A sorting priority of the node in the open list is a minimum conflict and/or a minimum sum of path costs, and may also be set based on requirements, which is not limited in the embodiments of the present disclosure. The closed list stores a high-level node whose adjacent points have been expanded.

At step 805, it is determined whether the open list is empty or whether the iteration termination condition is satisfied.

If the open list is empty or the iteration termination condition is satisfied, step 806 is performed. If the open list is not empty and the iteration termination condition is not satisfied, step 807 is performed.

For example, the iteration termination condition may include a computation duration exceeding a predetermined time and/or a computation iteration count exceeding a maximum iteration count.

At step 806, a suboptimal solution is returned.

When the open list is empty or the iteration termination condition is satisfied, the computation is stopped, and the solution with the minimum cost in the open list and the closed list is selected as the suboptimal solution and returned for output.

At step 807, a node with the minimum cost is taken out from the open list as a current solution.

When the open list is not empty and the iteration termination condition is not satisfied, the node with the minimum cost is taken out from the open list as the current solution.

At step 808, it is determined whether a number of conflicts of the current solution is zero.

If the number of conflicts of the current solution is zero, step 809 is performed. If the number of conflicts of the current solution is not zero, step 810 is performed.

At step 809, the current solution is returned as an optimal solution.

If the number of conflicts of the current solution is zero, the computation is ended, and the current solution is returned as the final solution. The spatiotemporal paths corresponding to the final solution are the target spatiotemporal paths of the robots.

At step 810, based on an earliest conflict in time in the current solution, a sub node is generated, and a path searching constraint is added.

At step 811, a low-level algorithm is invoked to re-search a path for the sub node.

At step 812, the conflict detection is performed on the sub node, a cost is updated, and the sub node is added to the open list.

If the number of conflicts of the current solution is not zero, the conflict resolution is performed on the current solution. For example, based on the earliest conflict in time in the current solution, the sub node may be generated and the path searching constraint may be added. Then, the low-level algorithm is invoked to re-search the path for the robot of the sub node. If the path searching is successful, the spatiotemporal path of the robot in the sub node is updated, the conflict detection is re-performed on the sub node, the cost is updated, and the sub node is put into the open list.

After step 812, step 805 is continued to be performed.

It needs to be noted that step 801 to step 812 are described in the above embodiments (e.g., step 110 to step 140, and step 710 to step 760), and the beneficial effects produced are similar to those produced by the path finding method in the above embodiments. To avoid repetition, details are not described here again.

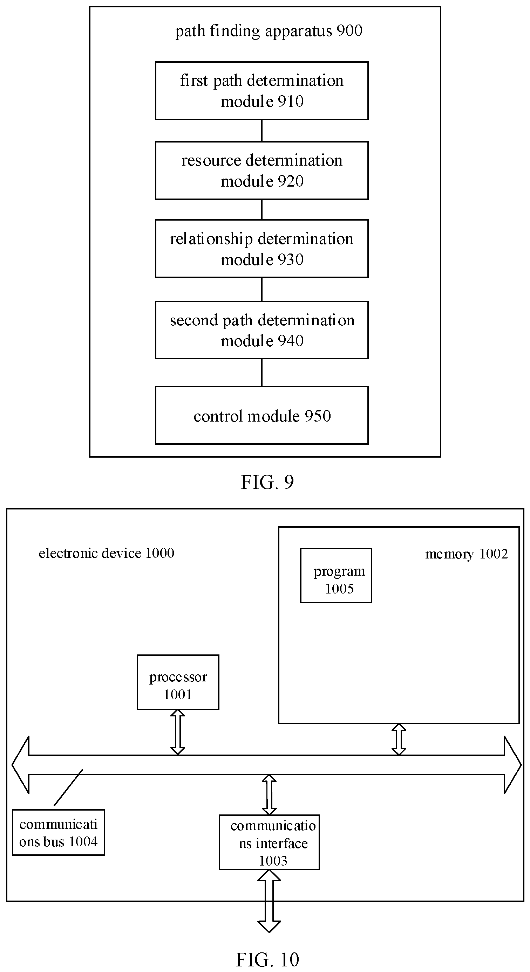

FIG. 9 is a block diagram of a path finding apparatus according to some embodiments of the present disclosure. As shown in FIG. 9, the path finding apparatus 900 includes a first path determination module 910, a resource determination module 920, a relationship determination module 930, a second path determination module 940, and a control module 950. The first path determination module 910 is configured to: determine a spatial path for each of a plurality of robots to perform a corresponding transport task based on map information of a warehouse system, position information of the plurality of robots in the warehouse system, and the transport task corresponding to each of the robots. The resource determination module 920 is configured to: determine a required resource and a held resource of each of the robots on the spatial path for each of the robots to perform the corresponding transport task based on a current position of each of the robots and a device attribute of each of the robots. The relationship determination module 930 is configured to: determine a plurality of waiting robot sets among the plurality of robots and waiting relationships among a plurality of waiting robots in each of the waiting robot sets based on the required resource and the held resource of each of the robots. The second path determination module 940 is configured to: obtain a spatiotemporal path of each of the waiting robots by adding a driving state corresponding to at least one time node to a spatial path of each of the waiting robots based on the waiting relationships among the plurality of waiting robots in each of the waiting robot sets, in which the driving state includes driving or waiting. The control module 950 is configured to: control each of the waiting robots to perform the transport task based on the spatiotemporal path.

In some embodiments, the resource determination module 920 is configured to: determine a motion envelope of each of the robots when moving from a current path point corresponding to the current position thereof to a next path point based on the current position of each of the robots, the device attribute of each of the robots, and the spatial path for each of the robots to perform the corresponding transport task; determine the motion envelope of each of the robots when moving from the current path point to the next path point as the required resource of each of the robots; and determine a stationary envelope of each of the robots when located at the current path point based on the current position of each of the robots and the device attribute of each of the robots; and determine the stationary envelope of each of the robots when located at the current path point as the held resource of each of the robots.

In some embodiments, the relationship determination module 930 is configured to: in a case that an intersection exists between a required resource of any first robot among the plurality of robots and a held resource of a second robot, determine the first robot and the second robot as the waiting robots, and add the first robot and the second robot to a waiting robot set; and determine the waiting relationship between the first robot and the second robot as the first robot waiting for the second robot.

In some embodiments, the second path determination module 940 is configured to: determine a sequence order in which each of the waiting robots passes through a conflict area corresponding to the waiting robot set based on the waiting relationships among the waiting robots in the waiting robot set; determine the driving state corresponding to the at least one time node for each of the waiting robots at the at least one path point in the conflict area based on the sequence order in which each of the waiting robots passes through the conflict area; and obtain the spatiotemporal path of each of the waiting robots by adding the driving state of the at least one time node to the spatial path of each of the waiting robots based on the driving state corresponding to the at least one time node for each of the waiting robots at the at least one path point in the conflict area.

In some embodiments, the second path determination module 940 is configured to: establish a topological sort of the waiting relationships among the plurality of waiting robots in the waiting robot set based on the waiting relationships among the waiting robots in the waiting robot set; determine a finding priority for each of the waiting robots based on the topological sort of the waiting relationships; and determine the sequence order in which each of the waiting robots passes through the conflict area corresponding to the waiting robot set based on the finding priority for each of the waiting robots.

In some embodiments, the second path determination module 940 is configured to: construct a directed acyclic graph, in which each of the waiting robots in the waiting robot serves as a vertex and the waiting relationships among the waiting robots serve as an edge; and obtain the topological sort of the waiting relationships by arranging the waiting robots corresponding to each of the vertices of the directed acyclic graph into a linear sequence.

In some embodiments, the path finding apparatus 900 further includes a node module, a conflict detection module, and a third path determination module. The first path determination module 910 is configured to: determine a spatiotemporal path corresponding to each of the non-waiting robots based on a spatial path of at least one non-waiting robot in the warehouse system. The node module is configured to: generate a root node based on the spatiotemporal path of each of the waiting robots and the spatiotemporal path of the at least one non-waiting robot, and add the root node to a node list; determine a reference node in the node list, in which the reference node is a node with the minimum cost in the node list. The conflict detection module is configured to: generate an envelope conflict set by performing an envelope conflict detection on the reference node based on a device attribute of each of the waiting robots and each of the non-waiting robots. The node module is also configured to: determine a sub node corresponding to the envelope conflict set based on the envelope conflict set and a predetermined conflict resolution strategy, in which the predetermined conflict resolution strategy includes waiting and continuing to drive. The third path determination module is configured to: determine a target spatiotemporal path corresponding to each of the waiting robots and each of the non-waiting robots by adding the sub node to the node list, and iteratively perform the step of determining the reference node in the node list until the envelope conflict set is empty or an iteration termination condition is satisfied.

In some embodiments, the iteration termination condition includes at least one of: the node list being empty, an iteration time exceeding a predetermined time threshold, or an iteration count exceeding a predetermined count threshold.

In some embodiments, the third path determination module is configured to: in a case that the envelope conflict set is empty, determine a spatiotemporal path corresponding to the reference node as the target spatiotemporal path for each of the waiting robots and each of the non-waiting robots; and in a case that the iteration termination condition is satisfied, determine a spatiotemporal path corresponding to the node with the minimum cost as the target spatiotemporal path for each of the waiting robots and each of the non-waiting robots.

In some embodiments, the first path determination module 910 is configured to: determine at least one finding path for each of the robots to perform the transport task on the map information based on the position information of each of the robots, a task start point and a task end point of the transport task corresponding to each of the robots; and determine the spatial path from the at least one finding path, in which the spatial path is a path with a minimum cost among the at least one finding path, and/or the spatial path is a path that does not include a predetermined hot area among the at least one finding path.

In some embodiments, the path finding apparatus 900 further includes a deadlock determination module and a deadlock resolution module. The deadlock determination module is configured to: determine a deadlocked robot having a deadlock among the plurality of robots based on the current position of each of the robots and the spatial path for each of the robots to perform the transport task. The deadlock resolution module is configured to: control the deadlocked robot to pass through a deadlock area based on a deadlock resolution strategy, in which the deadlock resolution strategy includes re-finding a spatial path for the deadlocked robot.

FIG. 10 is a block diagram of an electronic device according to some embodiments of the present disclosure. In some embodiments, the electronic device includes one or more processors and a memory. The memory is configured to store one or more programs. When the one or more programs are performed by the one or more processors, the one or more processors implement the path finding method in the above embodiments.

As shown in FIG. 10, the electronic device 1000 includes: a processor 1001 and a memory 1002. For example, the electronic device 1000 may further include: a communications interface 1003 and a communications bus 1004.

The processor 1001, the memory 1002, and the communications interface 1003 communicate with each other via the communications bus 1004. The communications interface 1003 is configured to communicate with a network element of other devices such as a client or another server.

In some embodiments, the processor 1001 is configured to execute a program 1005, and specifically may execute relevant steps in embodiments of the above path finding method. Specifically, the program 1005 may include program codes, and the program codes include computer-executable instructions.

For example, the processor 1001 may be a central processing unit (CPU), or an application specific integrated circuit (ASIC), or one or more integrated circuits configured to implement the embodiments of the present disclosure. The electronic device 1000 may include one or more processors, which may be processors of the same type, such as one or more CPUs, or may be processors of different types, such as one or more CPUs and one or more ASICs.

In some embodiments, the memory 1002 is configured to store the program 1005. The memory 1002 may include high-speed random-access memory (RAM), and may also include a non-volatile memory (NVM), such as at least one disk memory.

The program 1005 may specifically be invoked by the processor 1001 to cause the electronic device 1000 to perform operations of the path finding method.

The embodiments of the present disclosure provide a computer-readable storage medium. The computer-readable storage medium stores at least one executable instruction. When the executable instruction is running on the electronic device 1000, the electronic device 1000 is caused to perform the path finding method in the above embodiments.

The executable instruction may specifically be used to cause the electronic device 1000 to perform operations of the path finding method.

For example, the computer-readable storage medium may be a read-only memory (ROM), a random access memory (RAM), a compact disc read-only memory (CD-ROM), a magnetic tape, a floppy disk, an optical data storage device, and so on.

In some embodiments, the embodiments of the present disclosure provide a computer program product. The computer program product includes a computing program stored on a non-transitory computer-readable storage medium. The computer program includes program instructions. When the program instructions are executed by a computer, the computer is caused to perform the path finding method according to any one of the above embodiments.

In some embodiments, the embodiments of the present disclosure provide a computer program that, when executed by a processor, implements the path finding method according to any one of the above embodiments.

The beneficial effects achievable by the path finding apparatus, the electronic device, the computer-readable storage medium, the computer program product, and the computer program provided by the embodiments of the present disclosure may refer to the beneficial effects of the corresponding path finding method provided above, and are not described here again.

It needs to be noted that the relational terms herein, such as "first" and "second", are used only for differentiating one entity or operation, from another entity or operation, which, however do not necessarily require or imply that there should be any real relationship or sequence. Moreover, the terms "comprise", "include" or any other variations thereof are meant to cover non-exclusive including, so that the process, method, article or device including a series of elements do not only include those elements, but also include other elements that are not explicitly listed or also include the inherent elements of the process, method, article or device. In the case that there are no more restrictions, an element qualified by the statement "includes a..." does not exclude the presence of additional identical elements in the process, method, article or device that includes the said element.

Various embodiments in the present disclosure are described in a related manner, and the same or similar parts between the embodiments may be referred to each other. Each embodiment focuses on the differences from other embodiments. In particular, for the apparatus embodiments, since it is basically similar to the method embodiments, the description is relatively simple, and relevant parts may refer to the description of the method embodiments.

The logic and/or step described in other manners herein or shown in the flowcharts, for example, may be considered as a particular sequence table of executable instructions for realizing the logical function, and may be specifically implemented in any computer-readable medium to be used by the instruction execution system, device or equipment (such as the system based on computers, the system including processors or other systems capable of obtaining the instruction from the instruction execution system, device and equipment and executing the instruction), or to be used in combination with the instruction execution system, device and equipment.

As to the specification, "the computer readable medium" may be any device adaptive for including, storing, communicating, propagating or transferring programs to be used by or in combination with the instruction execution system, device or equipment.

More specific examples (non-exhaustive list) of the computer readable medium include: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM).

In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories. It may be understood that each part of the present disclosure may be realized by the hardware, software, firmware or their combination.

In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an ASIC having an appropriate combination logic gate circuit, a programmable gate array (PGA), a field programmable gate array (FPGA), etc.

The above embodiments of the present disclosure do not constitute a limitation on the protection scope of the present disclosure.

## Claims

1. A path finding method, performed by a control device, comprising:
determining a spatial path for each of a plurality of robots to perform a corresponding transport task based on map information of a warehouse system, position information of the plurality of robots in the warehouse system, and the transport task corresponding to each of the robots;
determining a required resource and a held resource of each of the robots on the spatial path for each of the robots to perform the corresponding transport task based on a current position of each of the robots and a device attribute of each of the robots;
determining a plurality of waiting robot sets among the plurality of robots and waiting relationships among a plurality of waiting robots in each of the waiting robot sets based on the required resource and the held resource of each of the robots; and
obtaining a spatiotemporal path of each of the waiting robots by adding a driving state corresponding to at least one time node to a spatial path of each of the waiting robots based on the waiting relationships among the plurality of waiting robots in each of the waiting robot sets, and controlling each of the waiting robots to perform the transport task based on the spatiotemporal path, wherein the driving state comprises driving or waiting.

2. The method of claim 1, wherein determining a required resource and a held resource of each of the robots on the spatial path for each of the robots to perform the corresponding transport task based on a current position of each of the robots and a device attribute of each of the robots comprises:
determining a motion envelope of each of the robots when moving from a current path point corresponding to the current position thereof to a next path point based on the current position of each of the robots, the device attribute of each of the robots, and the spatial path for each of the robots to perform the corresponding transport task;
determining the motion envelope of each of the robots when moving from the current path point to the next path point as the required resource of each of the robots; and
determining a stationary envelope of each of the robots when located at the current path point based on the current position of each of the robots and the device attribute of each of the robots; and
determining the stationary envelope of each of the robots when located at the current path point as the held resource of each of the robots.

3. The method of claim 2, wherein determining a plurality of waiting robot sets among the plurality of robots and waiting relationships among a plurality of waiting robots in each of the waiting robot sets based on the required resource and the held resource of each of the robots comprises:
in a case that an intersection exists between a required resource of any first robot among the plurality of robots and a held resource of a second robot, determining the first robot and the second robot as the waiting robots, and adding the first robot and the second robot to a same waiting robot set; and
determining the waiting relationship between the first robot and the second robot as the first robot waiting for the second robot.

4. The method of claim 3, wherein obtaining a spatiotemporal path of each of the waiting robots by adding at least one driving state corresponding to a time node to a spatial path of each of the waiting robots based on the waiting relationships among the plurality of waiting robots in each of the waiting robot sets comprises:
determining a sequence order in which each of the waiting robots passes through a conflict area corresponding to the waiting robot set based on the waiting relationships among the waiting robots in the waiting robot set;
determining the driving state corresponding to the at least one time node for each of the waiting robots at the at least one path point in the conflict area based on the sequence order in which each of the waiting robots passes through the conflict area; and
obtaining the spatiotemporal path of each of the waiting robots by adding the driving state of the at least one time node to the spatial path of each of the waiting robots based on the driving state corresponding to the at least one time node for each of the waiting robots at the at least one path point in the conflict area.

5. The method of claim 4, wherein determining a sequence order in which each of the waiting robots passes through a conflict area corresponding to the waiting robot set based on the waiting relationships among the waiting robots in the waiting robot set comprises:
establishing a topological sort of the waiting relationships among the plurality of waiting robots in the waiting robot set based on the waiting relationships among the waiting robots in the waiting robot set;
determining a finding priority for each of the waiting robots based on the topological sort of the waiting relationships; and
determining the sequence order in which each of the waiting robots passes through the conflict area corresponding to the waiting robot set based on the finding priority for each of the waiting robots.

6. The method of claim 5, wherein establishing a topological sort of the waiting relationships among the plurality of waiting robots in the waiting robot set based on the waiting relationships among the waiting robots in the waiting robot set comprises:
constructing a directed acyclic graph, wherein each of the waiting robots in the waiting robot serves as a vertex and the waiting relationships among the waiting robots serve as an edge; and
obtaining the topological sort of the waiting relationships by arranging the waiting robots corresponding to each of the vertices of the directed acyclic graph into a linear sequence.

7. The method of any one of claims 1 to 6, wherein after obtaining a spatiotemporal path of each of the waiting robots by adding a driving state corresponding to at least one time node to a spatial path of each of the waiting robots based on the waiting relationships among the plurality of waiting robots in each of the waiting robot sets, the method further comprises:
determining a spatiotemporal path corresponding to each of the non-waiting robots based on a spatial path of at least one non-waiting robot in the warehouse system, wherein the plurality of robots comprise the at least one non-waiting robot;
generating a root node based on the spatiotemporal path of each of the waiting robots and the spatiotemporal path of the at least one non-waiting robot, and adding the root node to a node list;
determining a reference node in the node list, wherein the reference node is a node with the minimum cost in the node list;
generating an envelope conflict set corresponding to the reference node by performing an envelope conflict detection on the reference node based on a device attribute of each of the waiting robots and each of the non-waiting robots;
determining a sub node corresponding to the envelope conflict set based on the envelope conflict set and a predetermined conflict resolution strategy, wherein the predetermined conflict resolution strategy comprises waiting and continuing to drive; and
determining a target spatiotemporal path corresponding to each of the waiting robots and each of the non-waiting robots by adding the sub node to the node list, and iteratively performing the step of determining the reference node in the node list until the envelope conflict set is empty or an iteration termination condition is satisfied.

8. The method of claim 7, wherein the iteration termination condition comprises at least one of: the node list being empty, an iteration time exceeding a predetermined time threshold, or an iteration count exceeding a predetermined count threshold.

9. The method of claim 8, wherein determining the target spatiotemporal path corresponding to each of the waiting robots and each of the non-waiting robots until the envelope conflict set is empty or the iteration termination condition is satisfied comprises:
in a case that the envelope conflict set is empty, determining a spatiotemporal path corresponding to the reference node as the target spatiotemporal path for each of the waiting robots and each of the non-waiting robots; and
in a case that the iteration termination condition is satisfied, determining a spatiotemporal path corresponding to the node with the minimum cost as the target spatiotemporal path for each of the waiting robots and each of the non-waiting robots.

10. The method of any one of claims 1 to 6, wherein determining a spatial path for each of a plurality of robots to perform a corresponding transport task based on map information of a warehouse system, position information of the plurality of robots in the warehouse system, and the transport task corresponding to each of the robots comprises:
determining at least one finding path for each of the robots to perform the transport task on the map information based on the position information of each of the robots, a task start point and a task end point of the transport task corresponding to each of the robots; and
determining the spatial path from the at least one finding path, wherein the spatial path is a path with a minimum cost among the at least one finding path, and/or the spatial path is a path that does not comprise a predetermined hot area among the at least one finding path.

11. The method of any one of claims 1 to 6, further comprising:
determining a deadlocked robot having a deadlock among the plurality of robots based on the current position of each of the robots and the spatial path for each of the robots to perform the transport task; and
controlling the deadlocked robot to pass through a deadlock area based on a deadlock resolution strategy, wherein the deadlock resolution strategy comprises re-finding a spatial path for the deadlocked robot.

12. A path finding apparatus, comprising:
a first path determination module, configured to determine a spatial path for each of a plurality of robots to perform a corresponding transport task based on map information of a warehouse system, position information of the plurality of robots in the warehouse system, and the transport task corresponding to each of the robots;
a resource determination module, configured to determine a required resource and a held resource of each of the robots on the spatial path for each of the robots to perform the corresponding transport task based on a current position of each of the robots and a device attribute of each of the robots;
a relationship determination module, configured to determine a plurality of waiting robot sets among the plurality of robots and waiting relationships among a plurality of waiting robots in each of the waiting robot sets based on the required resource and the held resource of each of the robots;
a second path determination module, configured to obtain a spatiotemporal path of each of the waiting robots by adding a driving state corresponding to at least one time node to a spatial path of each of the waiting robots based on the waiting relationships among the plurality of waiting robots in each of the waiting robot sets, wherein the driving state comprises driving or waiting; and
a control module, configured to control each of the waiting robots to perform the transport task based on the spatiotemporal path.

13. An electronic device, comprising:
one or more processors; and
a memory configured to store one or more programs,
wherein when the one or more programs are executed by the one or more processors, the one or more processors implement the path finding method of any one of claims 1 to 11.

14. A computer-readable storage medium having a computer program stored thereon, wherein when the computer program is executed by a processor, the path finding method of any one of claims 1 to 11 is implemented.

15. A computer program product comprising a computer program that, when executed by a processor, implements the path finding method of any one of claims 1 to 11.
